# EUROPEAN PATENT APPLICATION

(11) **EP 1 192 926 A1**
(43) Date of publication of application: **03.04.2002**
(21) Application number: 01203670.3
(22) Date of filing: 24.09.2001
(51) Int. Cl.: A61G 17/00

(54) **Apparatus for cooling a dead body**

(30) Priority: 27.09.2000 NL 1016281
(71) Applicant: Van Willegen, Jan Willem, 4264 AZ Veen (NL)
(72) Inventor: Van Willegen, Jan Willem, 4264 AZ Veen (NL)
(74) Representative: Eveleens Maarse, Pieter

(57) **Abstract**

The invention relates to a cooling apparatus for the body of a deceased person, comprising a substantially flat element which is manufactured from soft material and through at least part of which runs a cooling channel, and a cooling machine to which the cooling channel is connected, wherein the element is dimensioned for placing in a coffin.

Using these measures it is possible to place the body of the deceased in the coffin immediately after it has been laid out. Excessive work is hereby prevented.

It is thus possible to also bury or incinerate the cooling element without contravening environmental regulations.

## Description

The invention relates to a cooling apparatus for the body of a deceased person, comprising a substantially flat element which is manufactured from soft material and through at least part of which runs a cooling channel, and a cooling machine to which the cooling channel is connected.

Such cooling apparatuses are generally known in the form of matrasses which are used for laying out deceased persons. During the period between the death and the burial or the cremation the body of the deceased must be placed in a coffin. In current practice this usually takes place immediately before the cremation or before the burial or shortly before the occasion to pay last respects in the funeral parlour. It is then quite a problem to lift the usually heavy body of the deceased from the cooled matrass or otherwise cooled carrier and to place it in the coffin.

The present invention has for its object to provide means whereby these difficult operations can be prevented or wherein it is made possible to place the deceased in the coffin at an earlier point in time.

This object is achieved in that the element is dimensioned for placing in a coffin.

Using these measures it is possible to place the body of the deceased in the coffin immediately after it has been laid out. Excessive work is hereby prevented.

It is of course possible to remove the flat cooling element from beneath the body of the deceased shortly before the cremation or the burial, so that the cooling element is not also buried or incinerated. It will be apparent that this is a difficult and unpleasant task.

This work can be avoided in that the flat element is manufactured at least partly from biodegradable material. It is hereby possible to also bury or incinerate the cooling element without contravening environmental regulations.

The flat element is therefore preferably manufactured wholly from biodegradable material.

When the cooling channel is filled with a biodegradable cooling agent, it is likewise unnecessary to drain the cooling agent; the hose can then just be disconnected and the coffin can be further processed.

The cooling channel is therefore preferably formed by a hose of biodegradable material.

Other attractive preferred embodiments are specified in the remaining sub-claims.

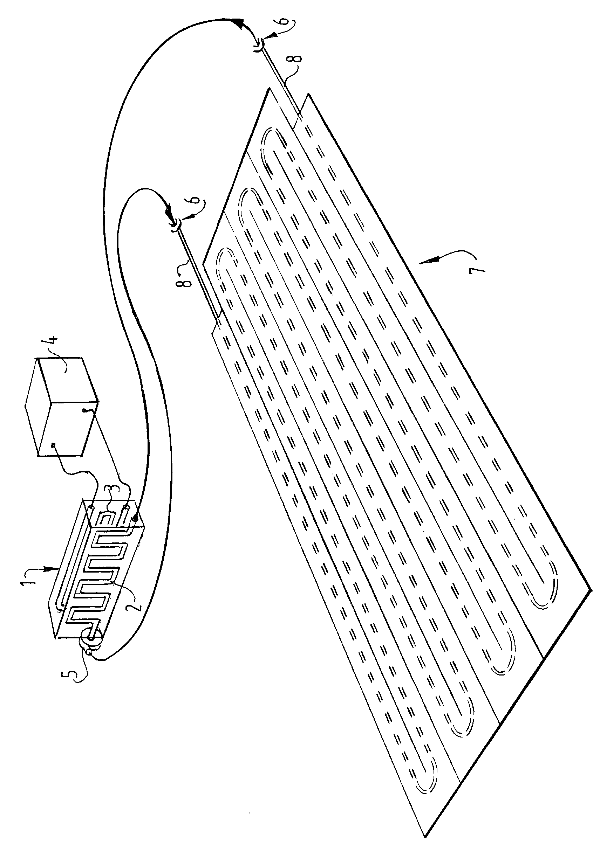

The present invention will be elucidated hereinbelow on the basis of the annexed figure, which shows a schematic view of a cooling device according to the invention. Shown in figure 1 is a heat exchanger 1 which is provided with a first channel 1 and a second channel 3. Second channel 3 is connected to a schematically designated cooling machine 4. In the first circuit 2 is arranged a pump 5 for a cooling medium which is not adapted to undergo a phase change. A cooling body designated in its entirety with 7 is connected to heat exchanger 1 by means of couplings 6. Use is made for this purpose of hose 8. Hose 8 extends wholly through cooling body 7 in a zig-zag pattern.

The cooling body 7 itself is formed by two layers of soft material, for instance textile, which according to the preferred embodiment of the invention is biodegradable. Using this apparatus the body of a deceased can be cooled, also when the body is placed in a coffin. As already stated in the preamble, the actual body 7, which is also known as matrass, is manufactured from biodegradable material. The two layers of the biodegradable material are mutually connected in strips extending parallel to each other, wherein the hose 8 extends in zig-zag manner between the thus resulting seams. The hose is preferably also manufactured from biodegradable material. This has the advantage that no environmental legislation is contravened as the coffin and contents decay. Use is preferably further made of a biodegradable cooling agent, such as water provided with an antifreeze compound. Use can be made for this purpose of glucol or other biodegradable materials.

## Claims

1. Cooling apparatus for the body of a deceased person, comprising a substantially flat element which is manufactured from soft material and through at least part of which runs a cooling channel, and a cooling machine to which the cooling channel is connected, **characterized in that** the element is dimensioned for placing in a coffin.

2. Cooling apparatus as claimed in claim 1, **characterized in that** the flat element is manufactured at least partly from biodegradable material.

3. Cooling apparatus as claimed in claim 2, **characterized in that** the flat element is manufactured wholly from biodegradable material.

4. Cooling apparatus as claimed in any of the foregoing claims, **characterized in that** the cooling channel is filled with a biodegradable cooling agent.

5. Cooling apparatus as claimed in any of the foregoing claims, **characterized in that** the cooling channel is formed by a hose of biodegradable material.

6. Cooling apparatus as claimed in claim 5, **characterized in that** the hose extends outside the cooling element and is connected to a cooling machine by means of a releasable coupling.

7. Cooling apparatus as claimed in claim 6, **characterized in that** the cooling machine is provided with coupling means for coupling to more than one cooling
